# EUROPÄISCHE PATENTANMELDUNG

(11) **EP 4 794 451 A1**
(43) Veröffentlichungstag der Anmeldung: **19.08.2026**
(21) Anmeldenummer: 26157257.2
(22) Anmeldetag: 09.02.2026
(51) Int. Cl.: H05B 6/06, H05B 6/14

(54) **INDUKTIONSSPULEN-BAUEINHEIT UND VERFAHREN ZUR ÜBERWACHUNG EINES INDUKTIVEN ERWÄRMUNGSVORGANGS FÜR EINE INDUKTIONSSPULEN-BAUEINHEIT SOWIE SELBSTLERNENDES SYSTEM ZUR ÜBERWACHUNG EINES INDUKTIVEN ERWÄRMUNGSVORGANGS UND VERFAHREN ZUM TRAINING DES SELBSTLERNENDEN SYSTEMS**

(30) Priorität: 14.02.2025 DE 102025105702
(71) Anmelder: Haimer GmbH, 86568 Hollenbach-Igenhausen (DE)
(72) Erfinder: Podhrazky, Antonin, 67531 Jemnice (CZ)

(57) **Zusammenfassung**

Die Erfindung betrifft eine **Induktionsspulen-Baueinheit** und ein **Verfahren zur Überwachung eines induktiven Erwärmungsvorgangs** für eine Induktionsspulen-Baueinheit. Die Erfindung betrifft weiter ein **selbstlernendes System** zur Überwachung eines induktiven Erwärmungsvorgangs und ein **Verfahren** zum Training des **selbstlernenden Systems.** Um den Automatisierungsgrad und die Betriebssicherheit bei einer Induktionsspulen-Baueinheit zu erhöhen, ist vorgesehen, dass zumindest eine, insbesondere mehrere unterschiedliche, Kenngrößen des Induktionsvorgangs, insbesondere ein Spulenstrom und/oder eine Spulenspannung und/oder ein Eingangsstrom und/oder eine Eingangsspannung und/oder ein Zwischenkreisstrom und/oder eine Zwischenkreisspannung, zur Verfügung gestellt wird/werde. Die zumindest eine bzw. die mehreren unterschiedlichen Kenngrößen werden einem selbstlernenden System, insbesondere einem neuronalen Netz, zugeführt und das selbstlernende System ermittelt dann unter Verwendung der zumindest einen bzw. der mehreren unterschiedlichen Kenngrößen eine Überwachungskenngröße, wie eine Temperaturkenngröße der in die Induktionsspule eingebrachten Hülsenpartie und/oder eine Hülsenkenngröße der in die Induktionsspule eingebrachten Hülsenpartie und/oder eine Zeitkenngröße für den Erwärmungsvorgang der in die Induktionsspule eingebrachten Hülsenpartie.

## Beschreibung

**Induktionsspulen-Baueinheit** und **Verfahren zur Überwachung eines induktiven Erwärmungsvorgangs** für eine Induktionsspulen-Baueinheit sowie **selbstlernendes System** zur Überwachung eines induktiven Erwärmungsvorgangs und **Verfahren** zum Training des **selbstlernenden Systems**

Die Erfindung betrifft eine **Induktionsspulen-Baueinheit** und ein **Verfahren zur Überwachung eines induktiven Erwärmungsvorgangs** für eine Induktionsspulen-Baueinheit. Die Erfindung betrifft weiter ein **selbstlernendes System** zur Überwachung eines induktiven Erwärmungsvorgangs und ein **Verfahren** zum Training des **selbstlernenden Systems.**

Derartige gattungsgemäße Induktionsspulen-Baueinheiten sind aus dem Stand der Technik, beispielsweise aus der EP 1 867 211 A1 bekannt.

Diese bekannten Induktionsspulen-Baueinheiten werden dazu verwendet, Werkzeughalter mittels durch Induktionsspulen erzeugbarer magnetischer Wechselfelder und der dadurch in den in den Induktionsspulen der Induktionsspulen-Baueinheiten eingebrachten Werkzeughaltern induzierten Wirbelströme thermisch aufzuweiten, um in diesem aufgeweiteten Zustand des Werkzeughalters dort ein Werkzeug einsetzen zu können, das nach einem Abkühlungsvorgang des Werkzeughalters dann fest und symmetrisch von diesem gehalten wird. Dieser Vorgang wird - kurz - auch als induktives Einschrumpfen von Werkzeugen in Werkzeughaltern bezeichnet und ist als solcher bekannt.

Für eine weitergehende Beschreibung der technischen und betriebsmäßigen Hintergründe sei daher auf die genannte Patentanmeldung verwiesen.

Bei einer solchen bekannten Induktionsspulen-Baueinheit stellt sich jedoch das Problem, dass für einen effizienten Betrieb derselben, d.h. dem induktiven Einschrumpfen von Werkzeugen in Werkzeughalter, im Speziellen beim Erwärmen der Werkzeughalter, die Induktionsspulen-Baueinheit hinsichtlich verschiedener Betriebs- bzw. Schrumpfparameter, wie insbesondere auch eine Erwärmungsdauer (oder eine Schrumpf-/Erwärmungsfrequenz, eine Schrumpf-/Erwärmungstemperatur, eine maximale Zeit für den Erwärmungsvorgang oder eine (Schrumpf- /Erwärmungs-)Energie), jeweils individuell auf den gerade/aktuell darin gehaltenen Werkzeughalter einzustellen ist, was einen hohen Grad von manuellem Eingriff erfordert und somit die Taktzeiten zum Tauschen eines Werkzeugs in verschiedenen Typen von Werkzeughaltern unter Umständen deutlich verlängert. Manuelle Eingriffe stellen überdies auch immer potentielle Fehlerquellen dar.

Wird andererseits eine derartige Einstellung auf den momentan gehaltenen Werkzeughalter nicht oder fehlerhaft vorgenommen, kann unter Umständen der Betrieb der Induktionsspulen-Baueinheit ineffizient sein, da die vorgesehenen Wirbelströme nicht geeignet in dem Werkzeughalter induziert werden. In besonders ungünstigen Fällen, wie beispielsweise bei zu langen Erwärmungsdauern, kann es sogar zu einer Überhitzung und damit zu Beschädigung und Zerstörung des Werkzughalters kommen.

Ferner sind selbstlernende Systeme bekannt.

Ein selbstlernendes System ist ein System, das in der Lage ist, aus Erfahrungen oder Daten zu lernen und sich dadurch automatisch zu verbessern, ohne dass explizite Programmieranweisungen erforderlich sind. Diese Systeme passen ihre Funktionsweise basierend auf neuen Informationen an, um ihre Leistung zu optimieren.

Ein häufiges Beispiel für selbstlernende Systeme sind maschinelle Lernalgorithmen (wie neuronale Netzwerke, Entscheidungsbäume oder Support Vector Machines), die aus großen Datenmengen Muster erkennen und Vorhersagen oder Entscheidungen treffen können. Im Gegensatz zu klassischen Programmen, bei denen alle Regeln und Abläufe im Vorfeld festgelegt werden, verbessern sich selbstlernende Systeme durch fortlaufendes Training und können ihre Vorhersagegenauigkeit oder Effizienz steigern, je mehr sie mit Daten konfrontiert werden.

Ein selbstlernendes System könnte beispielsweise so in der Lage sein, Bilder zu klassifizieren, Texte zu übersetzen oder sogar Entscheidungen in einem dynamischen Umfeld zu treffen, ohne dass ein Mensch ständig eingreifen muss.

Ein - beispielhaft oben genannt - neuronales Netz ist, wie aus dem Stand der Technik ebenfalls bekannt ist, ein Modell des maschinellen Lernens, das inspiriert ist von der Funktionsweise des menschlichen Gehirns.

Ein solches neuronales Netz besteht aus miteinander verbundenen "Neuronen", die in mehreren Schichten organisiert sind, um Daten zu verarbeiten und Muster zu erkennen. Diese Art von Netzwerk ist besonders gut geeignet für Aufgaben wie Bilderkennung, Sprachverarbeitung, Übersetzungen oder Vorhersagen.

Hauptkomponenten eines neuronalen Netzes sind die erwähnten, in Schichten (Eingabe- bzw. Ausgabeschicht, versteckte Schichten) strukturierten Neuronen. Die Neuronen (Knoten) stellen die grundlegenden Verarbeitungseinheiten des Netzes dar. Jedes Neuron empfängt Eingabedaten, führt eine Berechnung durch und gibt ein Ergebnis an die Neuronen in der nächsten Schicht weiter.

Eine Eingabeschicht erhält die Eingabedaten (zum Beispiel ein Bild oder einen Text) und leitet sie an die nächste Schicht weiter. Eine Ausgabeschicht gibt das endgültige Ergebnis oder die Vorhersage des Modells aus, z. B. die Klassifikation eines Bildes. Verborgene Schichten befinden sich zwischen der Eingabe- und der Ausgabeschicht und führen die Hauptberechnungen durch. In diesen Schichten werden komplexe Muster und Merkmale aus den Eingabedaten extrahiert.

Jede Verbindung zwischen Neuronen hat ein Gewicht, das bestimmt, wie stark das Signal von einem Neuron zum nächsten übertragen wird. Zusätzlich gibt es einen Bias, der dazu beiträgt, das Ergebnis eines Neurons zu verschieben und die Flexibilität des Modells zu erhöhen.

Nachdem ein Neuron die Eingabedaten verarbeitet hat, wird oft eine Aktivierungsfunktion angewendet, die entscheidet, ob das Neuron aktiviert (also "feuert") oder nicht. Beispiele für Aktivierungsfunktionen sind die Sigmoid-Funktion, ReLU (Rectified Linear Unit) und Tanh.

Ein neuronales Netz wird durch Training verbessert. Dabei werden große Mengen von Daten verwendet, um die Gewichte und Biases so anzupassen, dass das Netz möglichst genau Vorhersagen oder Klassifikationen machen kann. Dieser Prozess erfolgt in der Regel durch eine Methode namens Backpropagation, bei der der Fehler zwischen den Vorhersagen des Netzes und den tatsächlichen Ergebnissen rückwärts durch das Netz propagiert wird, um die Gewichtungen anzupassen.

Neuronale Netze, insbesondere tiefere Netzwerke (sogenannte Deep Learning-Netze), können sehr komplexe Aufgaben mit hoher Genauigkeit lösen; aber sie benötigen auch große Datenmengen und erhebliche Rechenressourcen.

Auch als selbstlernendes System bekannt sind Entscheidungsbäume. Gerade in der Künstlichen Intelligenz und speziell im Maschinellen Lernen ist der Entscheidungsbaum ein beliebter Algorithmus zur Klassifikation und Regression.

Ein Entscheidungsbaum ist ein systematisches Modell zur Darstellung und Analyse von Entscheidungsprozessen. Er bildet Entscheidungen und deren mögliche Folgen in einer baumartigen Struktur ab. Ausgangspunkt ist ein Startknoten, von dem aus sich verschiedene Äste verzweigen, die unterschiedliche Handlungsoptionen oder Ereignisse repräsentieren.

Man unterscheidet dabei Entscheidungsknoten (meist als Quadrat dargestellt), an denen eine bewusste Wahl getroffen wird, und Zufallsknoten (meist als Kreis dargestellt), an denen verschiedene Ereignisse mit bestimmten Wahrscheinlichkeiten eintreten können. Die Endpunkte des Baums zeigen mögliche Ergebnisse, die häufig mit Kosten, Nutzen oder Gewinnen bewertet werden.

Entscheidungsbäume werden genutzt, um komplexe Entscheidungen transparent zu machen, Alternativen zu vergleichen und die beste Handlungsoption auf Basis von Wahrscheinlichkeiten und erwarteten Ergebnissen zu wählen.

Entscheidungsbäume werden - wie auch andere selbstlernende Systeme, z.B. Neuronale Netze (s. oben) - trainiert. Bekannte hierzu zur Verfügung stehende Trainingsverfahren/-algorithmen sind zum Beispiel, Top-Down-Induktion (Recursive Partitioning), C4.5 und Nachfolger (z. B. CART, ID3), Bagging (Bootstrap Aggregation), Random Forest oder Boosting (z. B. AdaBoost, Gradient Boosting).

Weiterhin sind Implementierungsverfahren bekannt, um Strukturen von Entscheidungsbäumen zu entwerfen und optimieren, z.B. Scikit-learn.

Scikit-learn bietet insbesondere so eine geeignete Implementierung des (oben genannten) CART-Algorithmus (Classification and Regression Trees), der sowohl für Klassifikations- als auch für Regressionsprobleme verwendet werden kann.

Mit Scikit-learn können Entscheidungsbäume einfach trainiert werden, indem die Daten und Zielvariablen an die entsprechenden Klassen (z. B. DecisionTreeClassifier oder DecisionTreeRegressor) übergeben werden. Scikit-learn übernimmt dabei die Berechnung von Kriterien wie Gini-Impurity oder Informationsgewinn, um die besten Splits zu finden.

Es ist die Aufgabe der vorliegenden Erfindung, eine Induktionsspulen-Baueinheit und ein Verfahren zur Überwachung eines induktiven Erwärmungsvorgangs für eine Induktionsspulen-Baueinheit sowie ein selbstlernendes System zur Überwachung eines induktiven Erwärmungsvorgangs und ein Training für ein solches selbstlernendes System vorzusehen, die bzw. das die eben genannten Nachteile von aus dem Stand der Technik bekannten derartigen Induktionsspulen-Baueinheiten überwinden kann, wobei die Induktionsspulen-Baueinheit insbesondere einen erhöhten Automatisierungsgrad aufweisen und somit bei hoher Betriebssicherheit mit kürzeren Taktzeiten - prozesssicher - betrieben werden kann.

Diese Aufgabe wird gelöst durch eine **Induktionsspulen-Baueinheit** und ein **Verfahren zur Überwachung eines induktiven Erwärmungsvorgangs** für eine Induktionsspulen-Baueinheit sowie durch ein **selbstlernendes System** zur Überwachung eines induktiven Erwärmungsvorgangs und ein **Verfahren** zum Training eines solchen **selbstlernenden Systems** - mit den Merkmalen des jeweiligen unabhängigen Anspruchs. Vorteilhafte Weiterbildungen der Erfindung sind Gegenstand abhängiger Ansprüche sowie der nachfolgenden Beschreibung und beziehen sich sowohl auf die **Induktionsspulen-Baueinheit** als auch auf das **Verfahren zur Steuerung eines induktiven Erwärmungsvorgangs** für eine Induktionsspulen-Baueinheit sowie auch auf das **selbstlernende System** zur Überwachung eines induktiven Erwärmungsvorgangs und das **Verfahren** zum Training des **selbstlernenden Systems.**

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Die **Induktionsspulen-Baueinheit** als auch das **Verfahren zur Überwachung eines induktiven Erwärmungsvorgangs** für eine Induktionsspulen-Baueinheit sehen eine Induktionsspule bei der Induktionsspulen-Baueinheit vor, in welche eine Hülsenpartie eines Werkzeughalters einbringbar ist.

Wesentlicher Kern der Erfindung ist das **selbstlernende System,** insbesondere ein neuronales Netz oder ein Entscheidungsbaum, dem zumindest eine, insbesondere mehrere unterschiedliche, Kenngrößen des Induktionsvorgangs, insbesondere ein Strom und/oder eine Spannung, wie insbesondere ein Spulenstrom und/oder eine Spulenspannung und/oder ein Eingangsstrom und/oder eine Eingangsspannung und/oder ein Zwischenkreisstrom und/oder eine Zwischenkreisspannung, zur Verfügung gestellt wird bzw. werden kann.

Weiter auch kann dem **selbstlernenden System,** insbesondere dem neuronalen Netz oder dem Entscheidungsbaum, zumindest eine weitere Kenngröße, wie eine momentane Änderung des Spulenstroms und/oder eine momentane Änderung des Zwischenkreisstroms und/oder eine momentane Änderungsgeschwindigkeit des Spulenstroms und/oder eine momentane Änderungsgeschwindigkeit des Zwischenkreisstroms und/oder eine absolute Spulenspannung und/oder ein absoluter Spulenstrom und/oder eine Energie aus einem seit Beginn des Erwärmen geflossenen Spulenstroms und/oder eine Energie aus einem seit Beginn des Erwärmen geflossenen Zwischenkreisstroms und/oder ein Integral des seit Beginn des Erwärmen geflossenen momentanen Spulenstroms (Wirkstrom) und/oder ein Integral des seit Beginn des Erwärmen geflossenen Zwischenkreisstroms und/oder eine Heizzeit seit Beginn des Erwärmens und/oder eine momentane Induktivität der Induktionsspule oder eines Gesamtsystems aus der Induktionsspule und der Hülsenpartie und/oder ein momentaner Phasenwinkel zwischen einem momentanen Spulenstrom (Wirkstrom) und einer ihn treibenden Spulenspannung, zur Verfügung gestellt werden.

Eine weitere solche (, dem **selbstlernenden System,** insbesondere dem neuronalen Netz oder dem Entscheidungsbaum, zur Verfügung zu stellende/stellbare) Kenngröße kann eine Zeit(-dauer) sein, innerhalb der der Spulenstrom oder Zwischenkreisstrom eine vorgebbare Veränderung, beispielsweise einen Anstieg, erfährt. Beispielsweise kann dies die Zeit(-dauer) sein, welche der Spulenstrom oder Zwischenkreisstrom benötigt, um von einem ersten (unteren) Grenzwert, wie zum Beispiel 0 A, auf einen zweiten (oberen) Grenzwert, wie zum Beispiel eine maximale vorgebbare Stromstärke, zu steigen. Dies wäre beispielsweise bei einem Spulenstrom bzw. Zwischenkreisstrom bei einem aufgebrachten Prüfimpuls (s. später zum Prüfimpuls) der Fall.

Konkreter und beispielhaft kann so die Kenngrößen und/oder die weiteren Kenngrößen aus einer Kombination von Spulenstrom, Spulenspannung, Induktivität, Phasenwinkel, Heizzeit, Energieintegral und mindestens einer weiteren abgeleiteten Größe bestehen.

Dieses **selbstlernende System** ermittelt dann unter Verwendung der zumindest einen bzw. der mehreren unterschiedlichen Kenngrößen (, gegebenenfalls auch weiter mit der zumindest einen weiteren Kenngröße) eine Überwachungskenngröße, wie eine Temperaturkenngröße der in die Induktionsspule eingebrachten Hülsenpartie und/oder eine Hülsenkenngröße der in die Induktionsspule eingebrachten Hülsenpartie und/oder eine Zeitkenngröße für den Erwärmungsvorgang der in die Induktionsspule eingebrachten Hülsenpartie.

Der bei der Erfindung verwendete Begriff "Kenngröße" mag dabei für einen (eindimensionalen) Wert oder (mehrdimensionalen) Vektor einer (Prozess-)Größe bzw. Variable stehen, insbesondere einer sich im Zeitverlauf verändernden Variable, wie beispielsweise ein Strom, eine Spannung, eine Temperatur, eine Induktivität oder eine Energie oder Ähnliches.

Das **selbstlernende System** bzw. das neuronale Netz/Entscheidungsbaum kann optimiert werden, wenn eine Vielzahl von verdeckten Schichten, insbesondere von mehr als 10 verdeckten Schichten, insbesondere von mehr als 15 verdeckten Schichten, insbesondere von mehr als 20 verdeckten Schichten, insbesondere von mehr als 25 verdeckten Schichten, im Besonderen von mehr als 30 verdeckten Schichten, ganz im Besonderen von 32 verdeckten Schichten, verwendet werden.

Auch ist es - um das **selbstlernende System** bzw. das neuronale Netz weiter zu verbessern - von Vorteil, eine ReLU-Funktion und/oder eine Sigmoid-Funktion als Aktivierungsfunktion zu verwenden.

Zur Erhöhung der Robustheit gegenüber fehlerhaften oder manipulierten Eingangsdaten kann das **selbstlernende System** mit Plausibilitätsprüfungen, Ausreißererkennung und Redundanzmechanismen ausgestattet werden. Beispielsweise werden Eingangsdaten vor der Verarbeitung durch das selbstlernende System mittels digitaler Filter (z. B. Kalman-Filter) und statistischer Prüfungen auf Konsistenz und Plausibilität überprüft.

Das **selbstlernende System** kann als eigenständiges Modul, als integrierte Komponente einer Steuerungseinheit oder als cloudbasierter Dienst ausgeführt sein. Die Kommunikation mit anderen Maschinenkomponenten erfolgt über standardisierte Schnittstellen (z. B. OPC UA, MQTT), sodass eine einfache Integration in bestehende Fertigungsumgebungen und Produktionsleitsysteme (MES) möglich ist.

Das **selbstlernende System** bzw. das neuronale Netz/Entscheidungsbaum kann unter Verwendung der erwähnten Kenngrößen - dahingehend - trainiert **(Verfahren** zum Training **des selbstlernenden Systems)** werden, um die beschriebene Überwachungskenngröße, wie die Temperaturkenngröße der in die Induktionsspule eingebrachten Hülsenpartie und/oder die Hülsenkenngröße der in die Induktionsspule eingebrachten Hülsenpartie und/oder die Zeitkenngröße für den Erwärmungsvorgang der in die Induktionsspule eingebrachten Hülsenpartie, zu ermitteln.

Das Training, welches in der Regel mittels sogenannter Trainingsdaten (bzw. in Form von sogenannten Trainingsdatenvektoren) - und mit möglichst vielen von solchen - durchgeführt wird, kann so beispielsweise unter Verwendung der dem **selbstlernenden System** bzw. dem neuronalen Netz/Entscheidungsbaum zur Verfügung gestellten Kenngrößen (vgl. die zumindest eine bzw. mehrere unterschiedliche Kenngröße/-n bzw. die zumindest eine weitere Kenngröße, wie insbesondere ein Strom und/oder eine Spannung, wie insbesondere ein Spulenstrom und/oder eine Spulenspannung und/oder ein Eingangsstrom und/oder eine Eingangsspannung und/oder ein Zwischenkreisstrom und/oder eine Zwischenkreisspannung, und/oder insbesondere eine momentane Änderung des Spulenstroms und/oder eine momentane Änderungsgeschwindigkeit des Spulenstroms und/oder eine absolute Spulenspannung und/oder ein absoluter Spulenstrom und/oder eine Energie aus einem seit Beginn des Erwärmen geflossenen Spulenstroms und/oder ein Integral des seit Beginn des Erwärmen geflossenen momentanen Spulenstroms (Wirkstrom) und/oder eine Heizzeit seit Beginn des Erwärmens und/oder eine momentane Induktivität der Induktionsspule oder eines Gesamtsystems aus der Induktionsspule und der Hülsenpartie und/oder ein momentaner Phasenwinkel zwischen einem momentanen Spulenstrom (Wirkstrom) und einer ihn treibenden Spulenspannung und/oder eine Zeit(-dauer), innerhalb der der Spulenstrom oder Zwischenkreisstrom eine vorgebbare Veränderung, beispielsweise einen Anstieg, erfährt,) - , insbesondere auch inklusive/mit der zugehörig vom **selbstlernenden System** bzw. dem neuronalen Netz/Entscheidungsbaum zu liefernden Überwachungskenngröße (vgl. wie die Temperaturkenngröße der in die Induktionsspule eingebrachten Hülsenpartie und/oder die Hülsenkenngröße der in die Induktionsspule eingebrachten Hülsenpartie und/oder die Zeitkenngröße für den Erwärmungsvorgang der in die Induktionsspule eingebrachten Hülsenpartie), durchgeführt werden ("Trainingsdaten/-vektor").

Diese Trainingsdaten können durch definiert durchgeführte Erwärmungsvorgänge bestimmt werden, insbesondere dort gemessen oder aus dort gemessenen Größen ermittelt werden. Insbesondere können sie durch an Messkegeln durchgeführte Erwärmungsvorgänge gewonnen werden, bei welchem - für bzw. während dieser "definierten" Erwärmungsvorgänge - so angelegte (, gemessenen) Kenngrößen mit den jeweils zugehörigen (gemessenen) Überwachungskenngrößen erlangbar sind.

Beispielsweise können diese (gemessenen) Trainingsdaten mit einer "Auflösung" von 5, 10 oder 20 Werte pro Sekunde während der Erwärmung gewonnen werden.

Anders ausgedrückt, das Training des selbstlernenden Systems kann insbesondere auf Basis von realen Messdaten erfolgen, die während definierter Erwärmungsvorgänge an Referenzbauteilen (z. B. Messkegeln) erhoben werden.

Zusätzlich können auch simulierte oder synthetisch erzeugte Daten zur Abdeckung seltener oder extremer Betriebszustände verwendet werden.

Das Training kann sowohl überwachte Lernverfahren (z. B. Backpropagation für neuronale Netze, CART/Random Forest für Entscheidungsbäume) umfassen als auch kontinuierliches Nachtrainieren mittels Benutzerrückmeldungen und Online-Lernalgorithmen. Die Trainingsdaten umfassen dabei zweckmäßigerweise sämtliche als Eingangsgrößen genutzte Kenngrößen sowie die zugehörigen Zielgrößen (z. B. Temperatur, Resterwärmungsdauer, Geometrieparameter).

Auch können zugehörige Überwachungskenngrößen durch Benutzerrückmeldungen und/oder Benutzerinteraktionen erlangbar sein. Anders ausgedrückt, hier kann das **selbstlernende System** bzw. das neuronalen Netz/Entscheidungsbaum mit Benutzerrückmeldungen und/oder Benutzerinteraktionen trainiert werden.

Um die Leistungsstärke des **selbstlernenden Systems** bzw. des neuronale Netzes zu erhöhen, kann vorgesehen sein, das Training unter Verwendung eines Backpropagation-Verfahrens durchzuführen.

Weiterbildend - um das **selbstlernende System** bzw. das neuronale Netz zu verbessern - kann das **selbstlernende System** bzw. das neuronale Netz auch, insbesondere unter Verwendung von Benutzerrückmeldungen und/oder Benutzerinteraktionen, nachtrainiert werden.

Ungeachtet dessen, ist es beim Training wichtig, eine Vielzahl an Datenquellen einzubeziehen, um eine umfassende Modellbildung zu ermöglichen. Dies kann reale Messdaten, simulierte Szenarien oder auch synthetische Daten umfassen, um das System auf seltene oder extreme Bedingungen vorzubereiten.

Diese Daten können genutzt werden, um **selbstlernende System** bzw. das neuronale Netz/Entscheidungsbaum auf verschiedene Szenarien vorzubereiten - auch solche, die in der Praxis möglicherweise selten auftreten. Solche Daten helfen, die Robustheit und Generalisierungsfähigkeit des Modells zu verbessern.

Der **Erfindung** liegt die Erkenntnis zugrunde, dass komplexe Prozesse mittels (genauer) Analytik schwer bis gar nicht zu beschreiben sind und so durch die Analytik ermittelbare Prozessgrößen unzureichend genau sind. Eine darauf aufgesetzte Steuerung ist damit mit betriebstechnischen Sicherheitsrisiken behaftet. D.h. - hier im Falle einer (induktiven) Erwärmung eines Werkzeughalters - eine rein "analytisch aufgebaute" Überwachung und Steuerung für einen (induktiven) Erwärmungsvorgang bei Hülsenpartien bzw. Werkzeughaltern basierend auf analytisch ermittelte Größen (so beispielsweise aus der deutschen Patentanmeldung der Anmelderin DE 10 2024 128 298.3) kann sicherheitstechnische Risiken haben.

Selbstlernende Systeme, wie neuronale Netze oder Entscheidungsbäume, aber geben ein Instrument an die Hand, welches geeignet ist, komplexe Prozesse, wie hier den (induktiven) Erwärmungsvorgang von Hülsenpartien, (genauer) abzubilden bzw. zu beschreiben -, indem das selbstlernende System bzw. das neuronale Netz/Entscheidungsbaum den Prozess (anhand von (Trainings-)Daten) lernt. Es wird durch das selbstlernende System bzw. neuronale Netz/Entscheidungsbaum - quasi - ein Abbild des Prozesses/Erwärmungsprozesses (Erwärmungsvorgang) geschaffen, welches so dann genutzt werden kann, Prozessparameter, wie die Überwachungskenngrößen, - für eine Überwachung und auch Steuerung - zu ermitteln. Darauf aufgesetzt kann dann der Prozess überwacht, gesteuert und/oder geregelt werden.

Anders und vereinfacht ausgedrückt, das erfindungsgemäße **selbstlernende System** bzw. das neuronale Netz/Entscheidungsbaum generiert mit hoher Genauigkeit zuverlässige Prozessgrö-ßen, hier die Überwachungskenngrößen, auf welchen dann eine betriebssichere und fehlervermeidende (Prozess-)Überwachung und -Steuerung (vgl. die später erwähnten Grenzwertvergleiche für eine Abschaltung) aufgesetzt werden kann.

Im Unterschied zu bekannten Überwachungslösungen, die typischerweise auf Einzelmessgrößen wie Induktivität oder Temperatur und deren analytische Auswertung beschränkt sind, ermöglicht die vorliegende Erfindung durch die Verwendung des **selbstlernenden Systems,** insbesondere des neuronalen Netzes oder eines bzw. eines Ensembles von Entscheidungsbäumen, die gleichzeitige Verarbeitung einer Vielzahl von Kenngrößen. Dadurch werden komplexe, nichtlinear zusammenhängende Prozesszustände erkannt und bewertet, was eine signifikant verbesserte Prozesssicherheit, eine Reduktion manueller Eingriffe und eine prädiktive Fehlererkennung ermöglicht. Insbesondere ist die Erfindung in der Lage, auch bislang unbekannte oder seltene Fehlerzustände zu detektieren und darauf zu reagieren, was mit klassischen, rein analytischen Verfahren nicht möglich ist.

Das **selbstlernende System** - eingesetzt zur prädiktiven Wartung - kann aus den erfassten Kenngrößen einen Wartungsbedarf oder einen bevorstehenden Ausfall der Induktionsspulen-Baueinheit prognostizieren - und entsprechende Wartungssignale ausgeben.

Darüber hinaus bietet der Ansatz mit dem erfindungsgemäßen **selbstlernenden System** bzw. dem neuronalen Netz/Entscheidungsbaum die Möglichkeit, auch prädiktiv eingesetzt zu werden. Nicht nur der aktuelle Prozessstatus kann überwacht werden - und Anomalien und Abweichungen vom Normalzustand können identifiziert werden, sondern auch zukünftige Entwicklungen können vorhergesagt werden. Die ist besonders wertvoll für die proaktive "Wartung" und Optimierung von Betriebsparametern. Potenzielle Ausfälle können frühzeitig erkannt und (ggfl. durch Anpassungen) behoben werden, bevor sie zu teuren Stillständen führen. Dies verbessert die Zuverlässigkeit und Verfügbarkeit.

Die Erfindung leistet einen technischen Beitrag, indem sie die Überwachung und Steuerung des induktiven Erwärmungsvorgangs durch das **selbstlernende System** automatisiert und optimiert. Das System ist in der Lage, aus einer Vielzahl von Prozessdaten robuste Überwachungskenngrößen zu generieren, die eine adaptive, selbstoptimierende Prozessführung ermöglichen. Dadurch werden sowohl die Betriebssicherheit als auch die Energieeffizienz und die Lebensdauer der Werkzeughalter erhöht.

Eine Kombination von (herkömmlicher) "analytisch basierter" und "neuronaler" Überwachung (und Steuerung) mag die Überwachung des induktiven Erwärmungsvorgangs noch sicherer machen.

D.h., das **selbstlernende System** kann als Hybridmodell aus einem analytischen Modell und einem lernenden Modell ausgebildet sein, wobei die Ergebnisse beider Modelle zur Überwachung und Steuerung des Erwärmungsvorgangs kombiniert werden.

Darüber hinaus kann vorteilhafterweise mit der **Erfindung** der Automatisierungsgrad erhöht werden. Ist die **Erfindung** integriert in eine automatisch durchgeführte induktive Erwärmung eines Werkzeughalters, beispielsweise bei einem automatisierten Werkzeugwechsel, so ist, sind die Kenngrößen bei dem **selbstlernenden System** bzw. neuronalen Netz automatisch am/während des Prozesses abgreifbar - und ermittelt so dann das **selbstlernende System** bzw. neuronale Netz/Entscheidungsbaum die Überwachungskenngröße, kein manueller Benutzereingriff bei dem Prozess notwendig. D.h., der Prozess kann bei hoher Betriebssicherheit mit kürzeren Taktzeiten - prozesssicher - betrieben werden.

### Verfahren

Bei dem **Verfahren zur Steuerung eines induktiven Erwärmungsvorgangs** für eine Induktionsspulen-Baueinheit, beispielsweise eine Schrumpfvorrichtung, mit einer in eine Induktionsspule der Induktionsspulen-Baueinheit eingebrachten Hülsenpartie eines Werkzeughalters ist so vorgesehen, dass die zumindest eine Kenngröße, insbesondere die mehreren unterschiedlichen Kenngrößen, des Induktionsvorgangs zur Verfügung gestellt werden.

Um den Prozess des Erwärmens noch besser durch das selbstlernende System abzubilden, ist es zweckmäßig, wenn zumindest eine weitere Kenngröße, wie eine momentane Änderung des Spulenstroms und/oder eine momentane Änderung des Zwischenkreisstroms und/oder eine momentane Änderungsgeschwindigkeit des Spulenstroms und/oder eine momentane Änderungsgeschwindigkeit des Zwischenkreisstroms und/oder eine absolute Spulenspannung und/oder ein absoluter Spulenstrom und/oder eine Energie aus einem seit Beginn des Erwärmen geflossenen Spulenstroms und/oder eine Energie aus einem seit Beginn des Erwärmen geflossenen Zwischenkreisstroms und/oder ein Integral des seit Beginn des Erwärmen geflossenen momentanen Spulenstroms (Wirkstrom) und/oder ein Integral des seit Beginn des Erwärmen geflossenen Zwischenkreisstroms und/oder eine Heizzeit seit Beginn des Erwärmens und/oder eine momentane Induktivität der Induktionsspule oder eines Gesamtsystems aus der Induktionsspule und der Hülsenpartie und/oder ein momentaner Phasenwinkel zwischen einem momentanen Spulenstrom (Wirkstrom) und einer ihn treibenden Spulenspannung, zur Verfügung gestellt wird bzw. werden.

Eine weitere solche zur Verfügung zu stellende/stellbare Kenngröße kann eine Zeit(-dauer) sein, innerhalb der der Spulenstrom oder Zwischenkreisstrom eine vorgebbare Veränderung, beispielsweise einen Anstieg, erfährt. Beispielsweise kann dies die Zeit(-dauer) sein, welche der Spulenstrom oder Zwischenkreisstrom benötigt, um von einem ersten (unter) Grenzwert, wie zum Beispiel 0 A, auf einen zweiten (oberen) Grenzwert, wie zum Beispiel eine maximale vorgebbare Stromstärke, zu steigen. Dies wäre beispielsweise bei einem Spulenstrom bzw. Zwischenkreisstrom bei einem aufgebrachten Prüfimpuls (s. später zum Prüfimpuls) der Fall.

Ungeachtet dessen, kann eine solche Kenngröße eine unter Verwendung der zumindest einen bzw. der mehreren unterschiedlichen Kenngrößen ermittelte Größe sein, beispielsweise durch Integration, Differentialbildung oder Ähnlichem, wie beispielsweise die Energie als Integral des Spulenstroms (Wirkstrom).

Zweckmäßig mag es sein, wenn eine dem **selbstlernenden System** zur Verfügung gestellte Kenngröße vor seiner Zuführung zu dem **selbstlernenden System** einen digitalen Glättungsfilter durchläuft, beispielsweise einen Kalman-Filter. Dieser Filter ist besonders geeignet für die Echtzeitdatenverarbeitung, da er kontinuierlich Vorhersagen aktualisiert und Messungen einbezieht, um präzisere Schätzungen zu generieren. Er ist ideal für dynamische Systeme wie den Induktionsvorgang, wo sich die Zustände schnell ändern können. Der Einsatz adaptiver Algorithmen kann die Filterleistung optimieren, indem sie sich dynamisch an die sich ändernden Bedingungen des Erwärmungsprozesses anpassen.

"Unter zur Verfügung gestellt" mag auch bedeuten, dass die zumindest eine bzw. die mehreren unterschiedlichen Kenngrößen und/oder die zumindest eine weitere Kenngröße durch Messung vor und/oder während, insbesondere während, des Erwärmungsvorgangs oder durch Bereitstellen von, insbesondere gespeicherten oder errechneten, Werten für die zumindest eine bzw. mehreren unterschiedlichen Kenngrößen und/oder die zumindest eine weitere Kenngröße erfolgt.

Auch durch Messungen, beispielsweise durch entsprechende Sensoren bzw. Sensortechnologien, insbesondere Sensoren mit IoT Technologien, können die Kenngrößen "zur Verfügung gestellt" werden.

Die zumindest eine bzw. die mehreren unterschiedlichen Kenngrößen - oder diese und die zumindest eine weitere Kenngröße - werden dem **selbstlernenden System,** zugeführt.

Das **selbstlernende System** ermittelt unter Verwendung der ihm zugeführten Kenngrößen eine Überwachungskenngröße, wie eine Temperaturkenngröße der in die Induktionsspule eingebrachten Hülsenpartie und/oder eine Hülsenkenngröße der in die Induktionsspule eingebrachten Hülsenpartie und/oder eine Zeitkenngröße für den Erwärmungsvorgang der in die Induktionsspule eingebrachten Hülsenpartie.

Beispielsweise kann die Temperaturkenngröße eine Hülsenpartietemperatur des Werkzeughalters sein; die Hülsenkenngröße kann eine Geometrieangabe für die Hülsenpartie- bzw. den Werkzeughalter, insbesondere eine Werkzeughaltergröße, oder eine die Hülsenpartie- bzw. den Werkzeughalter klassifizierende (oder beschreibende) Angabe sein; die Zeitkenngröße kann eine Resterwärmungsdauer sein.

Unter Verwendung der Überwachungskenngröße, wie der Temperaturkenngröße und/oder der Hülsenkenngröße und/oder der Zeitkenngröße, wird der Erwärmungsvorgang überwacht.

Ferner kann auch vorgesehen werden, dass das Erwärmen der Hülsenpartie beendet (oder zumindest verändert) wird, wenn die Überwachungskenngröße und/oder eine der dem **selbstlernenden System** zugeführten Kenngröße einen festlegbaren Grenzwert erreicht bzw. über- oder unterschreitet. Dieses kann gewährleisten, dass der Erwärmungsvorgang auch betriebssicher erfolgt.

Zweckmäßig erscheint es, wenn unter Verwendung der ermittelten Überwachungskenngröße ein Erwärmungsparameter und/oder ein Abschaltparameter festgelegt oder nachjustiert wird, anhand diesem dann der Erwärmungsvorgang überwacht bzw. der Erwärmungsvorgang durchgeführt bzw. gesteuert wird. Auch wieder kann vorgesehen werden, dass das Erwärmen der Hülsenpartie beendet (oder zumindest verändert) wird, wenn ein solcher Parameter einen festlegbaren Grenzwert erreicht bzw. über- oder unterschreitet.

Weiterbildend kann - um den Automatisierungsgrad der Erwärmung weiter zu erhöhen - vorgesehen sein, dass vor Beginn - insbesondere automatisiert - die Geometrie, beispielsweise der Außendurchmesser oder Ähnliches, der in die Induktionsspule eingebrachten Hülsenpartie ermittelt - und so die eingebrachte Hülsenpartie "erkannt" wird.

Dieses ist beispielsweise in den deutschen Patentanmeldungen, 10 2015 016 831.2 und 10 2019 112 521.9, und in der europäischen Patentanmeldung, 19 17 6562.7, beschrieben. Deren Inhalt wird hiermit zum Gegenstand dieser Anmeldung gemacht.

Gilt bzw. ist dann die eingebrachte Hülsenpartie erkannt, so können dann für die eingebrachte Hülsenpartie bzw. deren Erwärmungsprozess Erwärmungsparameter, wie beispielsweise auch die bereitgestellten Kenngrößen bzw. die dem **selbstlernenden System** zugeführten Kenngrößen, festgelegt werden.

Solche Erwärmungsparameter können insbesondere auch sein eine Schrumpf-/Erwärmungsfrequenz und/oder eine Schrumpf-/Erwärmungstemperatur sowie und/oder eine Zeit für den Erwärmungsvorgang und/oder eine maximale Zeit für den Erwärmungsvorgang und/oder eine Energie (Stromintegral). Daraus lassen sich dann auch Grenzwerte für den Erwärmungsvorgang (, insbesondere für eine "neuronale" Überwachung und/oder "analytische" Überwachung) definieren.

Ferner kann in einer weiteren bevorzugten Weiterbildung vorgesehen sein, dass - nicht nur ein Entscheidungsbaum, sondern - mehrere Entscheidungsbäume eingesetzt werden.

Insbesondere kann es zweckmäßig sein, mehrere gleichstrukturierte Entscheidungsbäume zu verwenden. Jeder Entscheidungsbaum kann auf die gleiche Ausgangsgröße bzw. Ausgangsparameter trainiert werden (und in eine resultierende End-Ausgangsgröße können dann alle Ausgangsgrößen (z.B. anteilig) eingehen) - und so kann in der Kombination aller Entscheidungsbäume die Zuverlässigkeit bzw. Prognosegüte der Überwachungsgröße verbessert werden.

### Baueinheit

Bei der **Induktionsspulen-Baueinheit** - zur Durchführung des Verfahrens - ist erfindungsgemäß das erfindungsgemäße **selbstlernende System** vorgesehen.

Das **selbstlernende System** ermittelt - wie erwähnt - unter Verwendung der zur Verfügung gestellten Kenngrößen die Überwachungskenngröße.

Auch kann bei der **Induktionsspulen-Baueinheit** mindestens ein Strom- und/oder Spannungsdetektor - entweder in einem Zwischenkreis eines zur Versorgung des Spulenkreises mit elektrischer Energie dienenden Frequenzumrichters und/oder in einem Spulenkreis mit der Induktionsspule - vorgesehen werden.

Zweckmäßig mag es sein, wenn die **Induktionsspulen-Baueinheit** einem Komparator für einen Vergleich von mindestens einer der erwähnten Kenngrößen, wie insbesondere die Überwachungskenngröße und/oder eine der dem **selbstlernenden System** zugeführten Kenngröße, mit einem festlegbaren Grenzwert vorsieht.

Zur Erhöhung der Betriebssicherheit ist es zweckmäßig, wenn die **Induktionsspulen-Baueinheit** auch eine Abschaltautomatik aufweist, welche derart eingerichtet ist, dass sie den Erwärmungsvorgang durch die Induktionsspule abschaltet (oder zumindest verändert), wenn bei dem Vergleich der erwähnte festlegbare Grenzwert erreicht bzw. unter- oder überschritten wird.

Weiterbildend kann, um die **Induktionsspulen-Baueinheit** technisch weiter zu verbessern, vorgesehen sein, dass bei der **Induktionsspulen-Baueinheit** mindestens zwei, insbesondere parallellaufende, **selbstlernende Systeme,** welche zweckmäßigerweise dann unterschiedliche Überwachungskenngrößen ermitteln, wie beispielsweise die Temperaturkenngröße und die Zeitkenngröße oder die Hülsenkenngröße und die Zeitkenngröße oder die Hülsenkenngröße und die Temperaturkenngröße, vorgesehen sind.

Um die Betriebssicherheit der **Induktionsspulen-Baueinheit** weiter zu erhöhen, kann es zweckmäßig sein, dass die Schaltung auch mindestens ein Leistungshalbleiterbauelement, insbesondere mindestens einen Bipolartransistor mit isolierter Gate-Elektrode (IGBT) und/oder einen Metall-Oxid-Halbleiter-Feldeffekttransistor (MOSFET), aufweist, weisen diese gutes Durchlassverhalten, hohe Sperrspannungen und Robustheit auf - und sind darüber hinaus nahezu leistungslos ansteuerbar.

Indem so durch das **Verfahren** sowie bei der **Induktionsspulen-Baueinheit** ein weitestgehend automatischer bzw. automatisierter Betrieb, d.h. das induktive Einschrumpfen von Werkzeugen in Werkzeughaltern, im Speziellen das Erwärmen der Werkzeughalter, für jeweils einen gerade in der Induktionsspulen-Baueinheit eingebrachten Werkzeughalter durchgeführt werden kann, werden manuelle Eingriffe zur Einstellung von Betriebsparametern hierbei überflüssig gemacht, so dass einerseits die hierfür bisher benötigte Zeit eingespart wird und andererseits durch den automatischen/automatisierten Betrieb auch hohe Standards hinsichtlich Betriebssicherheit und Toleranzen eingehalten werden können, um einen vorschriftsmäßigen Betrieb der Baueinheit sicherstellen zu können. Auch ein effizienter Schutz vor Überhitzen eines zu erwärmenden/aufzuweitenden Werkzeughalters kann durch das Verfahren und bei der Induktionsspulen-Baueinheit bewirkt werden. Die Leistungsabgabe kann optimiert werden, um den Energieverbrauch zu reduzieren und die Effizienz zu steigern.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Insbesondere sind diese Merkmale jeweils einzeln und in beliebiger geeigneter Kombination mit den erfindungsgemäßen Verfahren und/oder erfindungsgemäßen Vorrichtungen kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

### Es zeigen:

- FIG 1: eine Induktionsspulen-Baueinheit gemäß einer Ausführung im Mittel-Längsschnitt;
- FIG 2: einen Schaltplan einer Schaltung zum Speisen einer Induktionsspule, die für die Induktionsspulen-Baueinheit nach FIG 1 zum Einsatz kommen kann;
- FIG 3: ein neuronales Netz eingesetzt für die Überwachung eines Erwärmungsvorgangs bei der Induktionsspulen-Baueinheit nach FIG 1;
- FIG 4: Spulenstromverläufe für verschiedene Werkzeughalter auf einen Prüfimpuls bei der Induktionsspulen-Baueinheit nach FIG 1;
- FIG 5: Entscheidungsbäume eingesetzt für die Überwachung eines Erwärmungsvorgangs bei der Induktionsspulen-Baueinheit nach FIG 1.

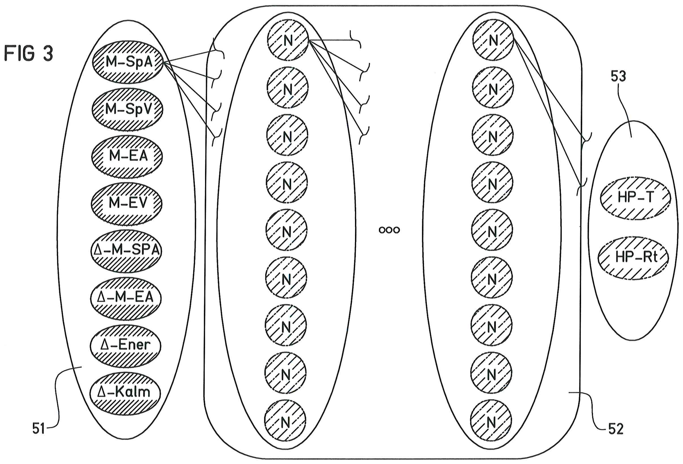

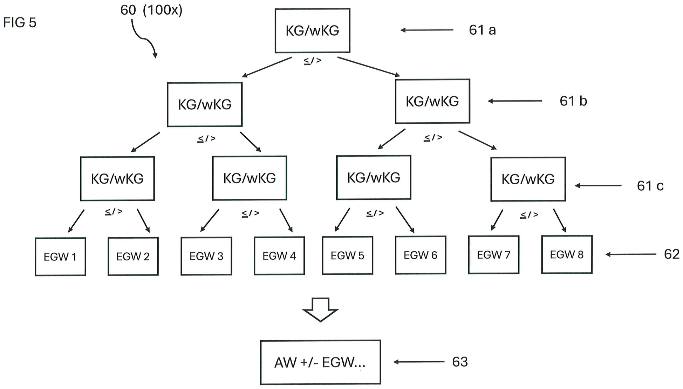

### Automatisierte Erwärmungssteuerung eines Schrumpfvorgangs mit einer Schrumpfvorrichtung / Überwachung des induktiven Erwärmungsvorgangs mittels selbstlernendem System (neuronales Netz bzw. Entscheidungsbäume) (FIGen 1 bis 2 und 4 - FIG 3 bzw. FIG 5)

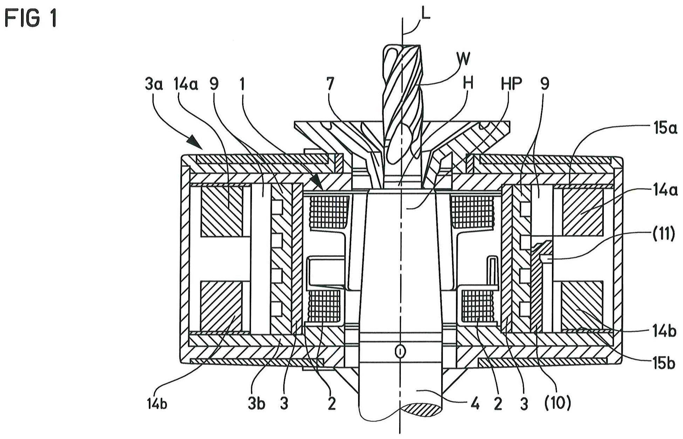

FIG 1 zeigt einen grundlegenden Aufbau einer Induktionsspulen-Baueinheit, welche aufgrund ihrer hier vorgesehenen Funktion (im Folgenden) auch als Schrumpfvorrichtung (auch Schrumpfgerät) bezeichnet werden soll.

### Induktionsspulen-Baueinheit/Schrumpfvorrichtung

Wie FIG 1 verdeutlicht, sieht die Schrumpfvorrichtung eine Induktionsspule 1 mit einzelnen Windungen 2 vor, in deren Zentrum ein Werkzeughalter 4 eingeschoben wird, um den Halteschaft H eines Werkzeugs W, wie hier beispielsweise eines Fräsers, in die Hülsenpartie HP ein- oder auszuschrumpfen.

Das Funktionsprinzip, das dem Ein- und Ausschrumpfen zu Grunde liegt, ist näher in der deutschen Patentanmeldung DE 199 15 412 A1 beschrieben. Deren Inhalt wird hiermit zum Gegenstand dieser Anmeldung gemacht.

An ihrem Außenumfang ist die Induktionsspule 1 mit einem ersten Mantel 3 aus elektrisch nichtleitendem und magnetisch leitendem Material versehen.

Typischerweise besteht der erste Mantel 3 entweder aus einem Ferrit oder einem Metallpulver bzw. Metallsinterwerkstoff, dessen einzelne Partikel elektrisch isolierend voneinander getrennt sind und die auf diese Art und Weise insgesamt gesehen im Wesentlichen magnetisch leitend und elektrisch nichtleitend sind.

Der erste Mantel 3 ist weiter so ausgeführt, dass er in Umfangsrichtung völlig in sich geschlossen ist, also die Umfangsfläche der Induktionsspule 1 vollständig überdeckt, so dass auch in der Theorie keinerlei "magnetische Lücken" verbleiben, abgesehen von irrelevanten lokalen Durchbrüchen, wie etwa einzelnen und/oder kleinen lokalen Bohrungen o. ä.

Wie FIG 1 weiter auch zeigt, hat bei der Schrumpfvorrichtung die Abschirmung aus magnetisch leitendem und elektrisch nichtleitendem Material mit dem ersten Mantel 3 nicht bereits ihr Bewenden.

Stattdessen schließt sich an mindestens einer, besser beiden Stirnseiten des ersten Mantels 3 eine magnetische Abdeckung 3a, 3b aus dem besagten Material an, die im Regelfall den ersten Mantel 3 kontaktieren.

Auf der dem Werkzeughalter 4 abgewandten Stirnseite der Induktionsspule 1 ist die magnetische Abdeckung 3a vorzugsweise als ganz oder bevorzugt abschnittweise auswechselbarer Polschuh ausgebildet, d. h. als ringförmiges Gebilde mit einer zentralen Öffnung, die einen Durchlass 7 für das ein- oder auszuspannende Werkzeug W bildet.

Auf der dem Werkzeughalter 4 zugewandten Stirnseite der Induktionsspule 1 ist die magnetische Abdeckung 3b vorzugsweise als in sich ebene Ringscheibe ausgestaltet, die die Wicklungen der Induktionsspule 1 idealerweise vollständig übergreift und einen zentralen Durchlass für die Hülsenpartie HP aufweist.

Um die Abschirmung noch weiter zu verbessern, sind, wie FIG 1 auch zeigt, die Induktionsspule 1 und ihr erster Mantel 3 an dessen Außenumfang von einem zweiten Mantel 9 umgeben - und zwar so, dass der erste Mantel 3 und der zweite Mantel 9 einander berühren, idealerweise auf dem überwiegenden bzw. gesamten Teil ihrer einander zugewandten Umfangsflächen.

Dieser zweite Mantel 9 ist aus magnetisch nicht leitfähigem und elektrisch leitfähigem Material, beispielsweise Aluminium, hergestellt.

Unter "elektrisch leitfähig" wird hier ein nicht nur lediglich lokal, sozusagen "kornweise" elektrisch leitfähiges Material verstanden, sondern ein Material, das in relevantem Umfang die Ausbildung von Wirbelströmen zulässt.

Das Besondere an dem zweiten Mantel 9 ist, dass er bevorzugt so ausgelegt und bevorzugt in radialer Richtung so dick ausgelegt ist, dass in ihm unter dem Einfluss des ihn durchdringenden Streufeldes der Induktionsspule 1 Wirbelströme erzeugt werden, die eine Schwächung des unerwünschten Streufeldes bewirken.

Weiter ist der zweite Mantel 9 an seinem Umfang von den nachfolgend noch näher zu erläuternden Leistungshalbleiterbauelementen 10 umgeben, die unmittelbar am Außenumfang des zweiten Mantels 9 in dortigen Aussparungen 11 angeordnet sind (nur angedeutet).

Diese Leistungshalbleiterbauelemente 10 weisen zwei große Hauptflächen und vier kleine Seitenflächen auf. Die großen Hauptflächen sind vorzugsweise mehr als viermal größer als jede der einzelnen Seitenflächen.

Die Leistungshalbleiterbauelemente 10 sind so angeordnet, dass eine ihrer großen Hauptflächen in wärmeleitendem Kontakt mit dem zweiten Mantel 9 steht, im Regelfall an dessen Außenumfang, wobei die betreffende große Hauptfläche des Leistungshalbleiterbauelements 10 mithilfe eines wärmeleitenden Klebstoffs an die Umfangsoberfläche des zweiten Mantels 9 angeklebt ist.

Jedes der Leistungshalbleiterbauelemente 10 besitzt verschiedene Anschlüsse zur Spannungsversorgung.

Weiter sind, wie FIG 1 auch zeigt, Kondensatoren 14a, 14b am Außenumfang der Induktionsspule 1 um diese herumgruppiert sind.

Bei den Kondensatoren 14a handelt es sich bevorzugt um Glättungskondensatoren, die unmittelbarer Bestandteil eines Leistungskreises sind; bei den Kondensatoren 14b handelt es sich bevorzugt um Schwingkreiskondensatoren, die ebenfalls unmittelbarer Bestandteil des Leistungskreises sind.

Um die Kondensatoren 14a, 14b elektrisch anzuschließen, sind hier mehrere elektrische Platinen 15a, 15b vorgesehen, die jeweils den Außenumfang der Induktionsspule 1 umgreifen.

Jede dieser Platinen 15a, 15b bildet vorzugsweise eine Ringscheibe. Jeder der Platinen 15a, 15b besteht vorzugsweise aus FR4 oder ähnlichen für Platinen gebräuchlichen Materialien.

Wie man in FIG 1 auch sieht, ist die Rotationssymmetrieachse jeder der beiden hier als Platinenringscheiben ausgeführten Platinen 15a, 15b hier koaxial zur Längsachse L der Induktionsspule (auch des Werkzeughalters 4/Werkzeugs W).

Die obere der beiden elektrischen Platinen 15a trägt die Glättungskondensatoren 14a, deren Anschlussfahnen die obere Platine 15a durchgreifen oder mithilfe der SMD-Technik mit der oberen Platine 15a verbunden sind, so, dass die Glättungskondensatoren 14a von der oberen Platine 15a herabhängen.

Die untere der beiden Platinen 15b ist entsprechend aufgebaut, die Schwingkreiskondensatoren 14b stehen nach oben von ihr ab.

Anschaulich zusammengefasst, die Leistungshalbleiter 10 bilden einen ersten gedachten Zylinder, der die Induktionsspule 1 umringt; die Kondensatoren 14a, 14b bilden einen zweiten gedachten Zylinder, der den ersten gedachten Zylinder umringt; die gegenüber dem Streufeld nur weniger empfindlichen Kondensatoren 14a, 14b bilden den gedachten, äußeren Zylinder, während die auf einen möglichst streufeldarmen Einbauraum angewiesenen Leistungshalbleiterbauelemente 10 den gedachten, inneren Zylinder bilden.

Wie weiter FIG 1 zeigt, ist die Induktionsspule 1 nicht über ihre gesamte Länge in Richtung ihrer Längsachse L hinweg "voll bewickelt". Stattdessen besteht sie - hier - aus zwei, im Regelfall zylindrischen Wicklungspaketen. Diese bilden jeweils eine Stirnseite der Induktionsspule 1. Sie halten untereinander einen Abstand ein, der - hier beispielshaft - ca. um mindestens den Faktor 1,5 größer ist, als die Erstreckung jeder der Wicklungspakete in Richtung der Längsachse L der Induktionsspule 1.

Eine derartige Induktionsspule 1 trägt zur Verringerung der Blindleistung bei, da ihr die Wicklungen im "Mittenbereich" fehlen, die unter dem Gesichtspunkt der möglichst effektiven Beheizung der Hülsenpartie HP des Werkzeughalters nicht unbedingt benötigt werden, die aber - wenn vorhanden - die Tendenz haben zusätzliche Blindleistung produzieren, ohne einen wirklich wichtigen Beitrag zur Beheizung zu leisten.

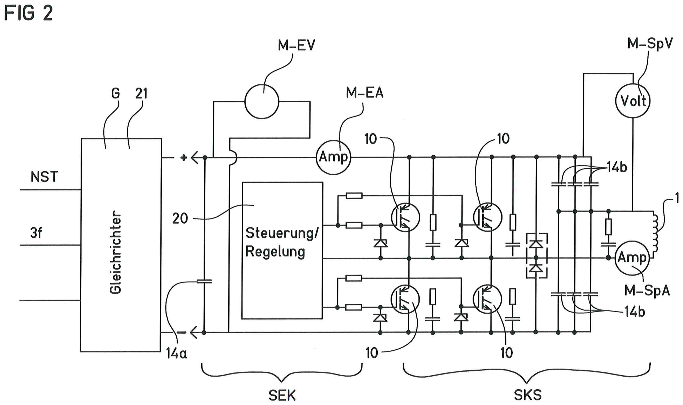

Um die Induktionsspule 1 - mit möglichst wenig Verlusten - zu versorgen, ist eine - in FIG 2 näher dargestellte Schaltung vorgesehen.

### Schaltung

Wie FIG 2 zeigt, weist diese Schaltung dazu einen Schwingkreis SKS auf (vgl. FIG 2).

Bei dem Schwingkreis SKS schwingt der überwiegende Teil der benötigten Energie periodisch (hochfrequent) zwischen der Induktionsspule 1 und einer Kondensatoreinheit 14a, 14b hin- und her. Dadurch muss in jeder Periode bzw. periodisch nur die dem Schwingkreis SKS durch seine Heizleistung und seine sonstige Verlustleistung entzogene Energie nachgespeist werden. Somit entfallen die bisherigen, sehr hohen Verluste.

Die die Induktionsspule 1 speisende Leistungselektronik wird, wie FIG 2 zeigt, eingangsseitig mit dem allgemein verfügbaren Netzstrom NST, der in Europa (dreiphasig Drehstrom, 3f) 400 V / 50 Hz (in anderen Ländern entsprechende Werte) beträgt, gespeist.

Der aus dem Netz bezogene Strom wird, wie in FIG 2 verdeutlicht, von einem Gleichrichter G 21 in Gleichstrom umgewandelt, der seinerseits durch den oder die Glättungskondensatoren 14a geglättet wird (nicht gezeigt).

Mit diesem Gleichstrom wird, wie FIG 2 weiter auch verdeutlicht, der eigentliche Schwingkreis SKS gespeist.

Das Rückgrat des Schwingkreises SKS bilden die Leistungshalbleiterbauelemente 10, die Schwingkreiskondensatoren 14b und die zum Ein- und Ausschrumpfen dienende Induktionsspule 1.

Gesteuert bzw. geregelt wird der Schwingkreis SKS von Steuerelektronik SEK, die mit Gleichstrom aus dem Gleichrichter G gespeist wird.

Die Leistungshalbleiterbauelemente 10 werden vorzugsweise durch Transistoren des Typs "Insulated-Gate Bipolar Transistor" kurz IGBT verwirklicht.

Die Steuerelektronik SEK schaltet die Leistungshalbleiterbauelemente 10/IGBT mit einer Frequenz, die die sich am Schwingkreis SKS einstellende Arbeitsfrequenz vorgibt.

Wichtig ist, dass der Schwingkreis SKS niemals genau in Resonanz arbeitet.

Dies würde hier zur raschen Zerstörung der Leistungshalbleiterbauelemente 10 durch die Spannungsspitzen führen. Stattdessen ist die Steuerelektronik SEK so gestaltet, dass sie die Leistungselektronik bzw. deren Schwingkreis SKS in einem vorgebbaren Arbeitsbereich betreibt, der lediglich nahe der Resonanz bzw. Eigenfrequenz des Systems liegt.

Vorzugsweise wird der Schwingkreis (mittels der Steuerung 20) so gesteuert bzw. geregelt, dass gilt 0,9 ≤ cos φ ≤ 0,99. Besonders günstig sind Werte, die im Bereich 0,95 ≤ cos φ ≤ 0,98 liegen. Dies führt nochmals zu einer Vermeidung von Spannungsspitzen und leistet daher der Miniaturisierung weiteren Vorschub.

### Überwachung des Schrumpf-/Erwärmungsvorgangs - Überhitzungsschutz

Um das Schrumpfgerat mit bestimmter Betriebssicherheit - möglichst automatisiert - zu betreiben, ist die Schrumpfvorrichtung mit einer automatischen Erwärmungssteuerung/-regelung ausgestattet, welche einen automatisierten Schrumpfbetrieb ermöglicht.

Diese Erwärmungssteuerung/-regelung wird durch eine entsprechende Steuerung bzw. Regelung 20 bei dem Schrumpfgerät umgesetzt, welche auch einen Überhitzungsschutz für einen aktuell zum Schrumpfen in die Induktionsspule eingesetzten Werkzeughalter 4 beinhaltet (, um mögliche Schäden am aktuell zu schrumpfenden Werkzeughalter durch dessen Überhitzung zu verhindern).

Wesentlich für die Steuerung bzw. Regelung 20 - und auch für den Überhitzungsschutz sind die Ströme und Spannungen, die in der Schaltung anfallen, d.h. hier insbesondere, Spulenstrom M-SpA, Spulenspannung M-SpV sowie Zwischenkreisstrom M-EA und/oder Zwischenkreisspannung M-EV.

Um Spulenstrom (M-SpA), Spulenspannung (M-SpV) und Zwischenkreisstrom (M-EA) und Zwischenkreisspannung (M-EV) zu messen, sieht die Schaltung, wie FIG 2 auch zeigt, entsprechend Strom-/Spannungsmessgeräte M-SpA (Spulenstrom), M-SpV (Spulenspannung) bzw. M-EA (Zwischenkreisstrom) bzw. M-EV (Zwischenkreisspannung) vor, welche an entsprechend gezeigten Positionen und in entsprechender Weise in der Schaltung verbaut sind. Diese Messgeräte liefern dabei die entsprechenden Messwerte in einer Abtastung von 10 Werte pro Sekunde.

Hängen dabei die gemessenen Größen bzw. auch deren Verlauf bei einer zum Schrumpfen eingesetzten Induktionsspule eben auch von der Temperatur der eingebrachten Hülsenpartie des Werkzeughalters ab, so kann dies bzw. können diese Größen in vorteilhafter Weise für eine - automatisierte - Überwachung bzw. Erwärmungssteuerung auf neuronaler Basis (vgl. FIG 3, neuronales Netz 50, vgl. FIG 5, Entscheidungsbäume 60) genutzt werden, um so - bei Vermeidung "manueller" Fehlerquellen, weil automatisiert, - die Sicherheit bei einer Schrumpfvorrichtung zu verbessern.

Kurz - die erwähnten (durch die Messgeräte messbaren) Größen Spulenstrom M-SpA, Spulenspannung M-SpV sowie Zwischenkreisstrom M-EA und/oder Zwischenkreisspannung M-EV werden (neben anderen Kenngrößen - s. später) - als Eingangsgrößen - einem neuronalen Netz 50 (vgl. FIG 3) (oder Entscheidungsbäumen 60, FIG 5) zugeführt, welches - in ersterem beispielhaften Ausführungsfall - neuronales Netz 50 die Temperatur der eingebrachten Hülsenpartie des Werkzeughalters HP-Temp - als eine mögliche Ausgangsgröße - ausgibt.

Daneben gibt das neuronale Netz 50 (vgl. FIG 3) auch eine Resterwärmungsdauer HP-t - als andere mögliche Ausgangsgröße - aus. Diese - zu einem bestimmten/aktuellen Zeitpunkt t vom neuronalen Netz 50 ausgegebene Resterwärmungsdauer HP-t beschreibt die Zeit, wie lange - ausgehend vom bestimmten/aktuellen Zeitpunkt - der Erwärmungsvorgang noch durchgeführt werden muss, um ein "optimales" Schrumpfen" zu gewährleisten. "Optimales Schrumpfen" mag dahingehend charakterisiert sein, dass es zerstörungsfrei, Werkzeug entnehmbar und einsetzbar und bei möglichst kurzer Dauer durchführbar ist.

Die erwähnten, dem neuronalen Netz 50 als weitere Eingangsgrößen zugeführten Kenngrößen sind hier sogenannte Deltagrößen, welche aus den erwähnten Strom- und Spannungsgrößen ableitbar bzw. errechenbar sind, nämlich ein Delta Spulenstrom Δ-M-SpA, eine Delta Zwischenkreisstrom Δ-M-EA sowie ein Delta Energie Δ-Ener und ein Delta Kalman Δ-Kalm.

Die weitere Kenngröße Delta Spulenstrom Δ-M-SpA basiert auf einer Ableitung des Spulenstroms; die weitere Kenngröße Delta Zwischenkreisstrom Δ-M-EA basiert auf einer Ableitung des Zwischenkreisstroms; die weitere Kenngröße Delta Energie Δ-Ener ist die während des Erwärmens in den aktuellen zu schrumpfenden Werkzeughalter bzw. Hülsenpartie eingebrachte Energiemenge (vgl. Integral des Spulenstroms); die weitere Kenngröße Delta Kalman Δ-Kalm ist der Ausgang eines mit dem Delta Zwischenkreisstrom M-EA gespeisten Kalmanfilters.

Die induktive Erwärmung wird - gesteuert durch die Steuerung bzw. Regelung 20 - dann solange durchgeführt, bis die erste der genannten Ausgangsgrößen sein jeweiliges Abschaltkriterium erreicht. D.h., entweder bis die Temperatur der aktuell eingebrachten Hülsenpartie des Werkzeughalters HP-Temp eine vorgegebene maximale Temperatur erreicht oder die Resterwärmungsdauer HP-t auf eine "Restdauer Null" abgesunken ist.

Dann wird die Induktionsspule automatisch abgeschaltet.

Diese "neuronale" Steuerung bzw. Regelung 20 bzw. Überhitzungsschutz kann noch durch eine analytische Steuerung bzw. Regelung 20 bzw. Überhitzungsschutz überlagert werden. Beispielsweise unter Benutzung weiterer Kenngrößen, wie eine vorgegebene maximale Erwärmungszeit und/oder die (in den aktuellen zu schrumpfenden Werkzeughalter bzw. Hülsenpartie eingebrachte) Energiemenge. Hierzu wird bei einem Erwärmungsvorgang jeweils die tatsächliche aktuelle Erwärmungsdauer gemessen und (fortwährend) die bis zu einem aktuellen Zeitpunkt in die Hülsenpartie eingebrachte Energiemenge (Integral des seit Beginn des Erwärmens geflossenen momentanen Spulenstroms (Wirkstrom)) bestimmt. Erreicht die (gemessene) tatsächliche aktuelle Erwärmungsdauer "ihren" individuell (für den aktuell zu schrumpfenden Werkzeughalter) vorgebbaren Grenzwert bzw. erreicht die Energiemenge "ihren" individuell vorgegebenen Grenzwert, so wird auch hier der Erwärmungsvorgang beendet bzw. die Induktionsspule abgeschaltet.

Hier in der Anmeldung genannte andere Kenngrößen, wie Induktivität oder Phasenwinkel, können in entsprechender Weise als weitere Abschaltkriterien eingesetzt werden.

### Neuronales Netz 50

FIG 3 zeigt das neuronale Netz 50.

Das neuronale Netz 50 sieht eine Eingangsschicht 51, - in diesem Fall - 32 verdeckte Schichten 52 und eine Ausgangsschicht 53 vor.

Der - acht (Eingangs-)Neuronen aufweisenden - Eingangsschicht 51 werden die erwähnten (Kenn-)Größen Spulenstrom M-SpA, Spulenspannung M-SpV sowie Zwischenkreisstrom M-EA und Zwischenkreisspannung M-EV - sowie die weiteren Kenngrößen, Delta Spulenstrom M-SpA, Delta Zwischenkreisstrom M-EA sowie Delta Energie und Delta Kalman, zugeführt.

Das neuronale Netz 50 ermittelt die an der - zwei (Ausgangs- )Neuronen aufweisenden - Ausgangsschicht 53 abgreifbaren Überwachungskenngrößen, Temperatur der eingebrachten Hülsenpartie des Werkzeughalters HP-T sowie die aktuelle Resterwärmungsdauer HP-Rt.

ReLu und Sigmoid werden als Aktivierungsfunktionen verwendet.

### Training des neuronalen Netzes 50

Um das neuronale Netz 50 zu trainieren, werden Messungen an definierten Messkegeln bzw. bei Erwärmungsvorgängen von den von dem Schrumpfgerät "geschrumpften" Messkegeln durchgeführt. Hierbei misst - zusätzlich zu den gemessenen Strömen und Spannungen - ein Temperatursensor auch die Temperatur an der Hülsenpartie des eingebrachten Messkegels. Die aktuelle Resterwärmungsdauer aus maximaler Erwärmungsdauer (des aktuell durchgeführten "Schrumpfens") minus seit Beginn des aktuell durchgeführten "Schrumpfens" vergangene Erwärmungszeit wird errechnet.

Die Messwerte (Ströme, Spannungen, Temperatur) sowie die aktuelle Resterwärmungsdauer werden - entsprechend der Abtastrate - mit hier 10 Werten pro Sekunde für die (gesamte) Erwärmungsdauer des durchgeführten "Schrumpfens" erhoben.

Die daraus gebildete Vielzahl von Trainingsdatenvektoren werden für das Training des neuronalen Netzes verwendet.

**Alternative:** Anstelle des hier beschriebenen neuronalen Netzes 50, welches die beiden Ausgangsgrößen/Überwachungskenngrößen, Temperatur der eingebrachten Hülsenpartie des Werkzeughalters HP-T sowie die aktuelle Resterwärmungsdauer HP-Rt, liefert, können auch zwei parallel arbeitende neuronale Netze verwendet werden.

Beide werden jeweils mit den vorbeschriebenen (Kenn-)Größen Spulenstrom M-SpA, Spulenspannung M-SpV sowie Zwischenkreisstrom M-EA und Zwischenkreisspannung M-EV - sowie die weiteren Kenngrößen, Delta Spulenstrom M-SpA, Delta Zwischenkreisstrom M-EA sowie Delta Energie und Delta Kalman gespeist. Das erste neuronale Netz gibt die Temperatur der eingebrachten Hülsenpartie des Werkzeughalters HP-T bzw. das zweite neuronale Netz gibt die aktuelle Resterwärmungsdauer HP-Rt aus.

Das Training für die beiden Netze wird entsprechend dem einen "Gesamtnetz" (neuronales Netz 50) durchgeführt.

### (Automatische) Erkennung des/der aktuell in die Schrumpfvorrichtung bzw. deren Induktionsspule eingebrachten Werkzeughalters/Hülsenpartie

Vor Beginn der Erwärmung der in die Induktionsspule (1, vgl. FIGen 1 und 2) eingebrachten Hülsenpartie (HP, vgl. FIG 1) wird zunächst - automatisiert - die Geometrie bzw. der Außendurchmesser der in die Induktionsspule eingebrachten Hülsenpartie ermittelt - und so die eingebrachte Hülsenpartie "erkannt".

Dieses erfolgt insbesondere dadurch, dass ein Prüfimpuls mit bekannter Stromgröße, Stromform, Frequenz und Wirkungsdauer auf die Induktionsspule noch vor Beginn eines eigentlichen induktiven Heizvorgangs bei der in die Induktionsspule eingebrachten Hülsenpartie aufgegeben wird, für diesen Prüfimpuls eine Zeit-/Stromkurve für die in die Induktionsspule eingebrachte Hülsenpartie ermittelt wird und die für den Prüfimpuls ermittelte Zeit-/Stromkurve als Ganzes als ein - Geometrie bestimmender - magnetischer Fingerabdruck für die in die Induktionsspule eingebrachten Hülsenpartie hergenommen wird.

Dieses ist beispielsweise in den deutschen Patentanmeldungen, 10 2015 016 831.2 und 10 2019 112 521.9, und in der europäischen Patentanmeldung, 19 17 6562.7, beschrieben. Deren Inhalt wird hiermit zum Gegenstand dieser Anmeldung gemacht ("Incorporation by Reference").

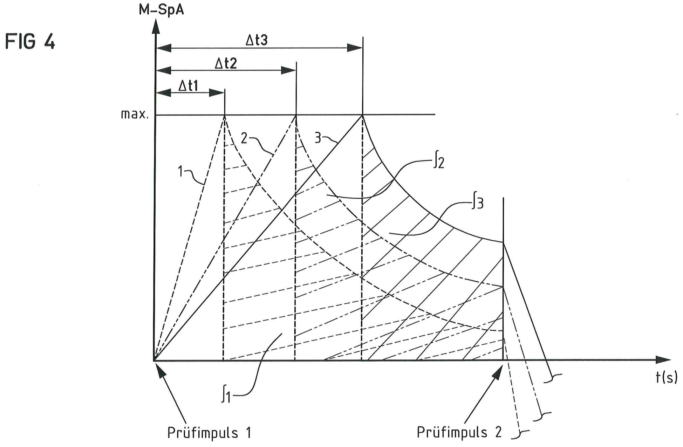

FIG 4 zeigt beispielhaft die Zeit-/Stromkurven (Kurven 1, 2 und 3) für drei (verschiedene) in die Induktionsspule eingebrachte Hülsenpartien bzw. Werkzeughalter (Werkzeughalter 1, 2 und 3) für einen definierten Prüfimpuls. Dadurch, dass die Zeit-/Stromkurven, wie FIG 4 entnehmbar ist, individuelle, spezifische Verläufe für die drei (verschiedenen) in die Induktionsspule eingebrachten Hülsenpartien bzw. Werkzeughalter aufweisen, lässt sich so - aus dem Verlauf der Zeit-/Stromkurve - auf die individuelle Hülsenpartie bzw. Werkzeughalter - schließen.

Gilt bzw. ist dann die eingebrachte Hülsenpartie erkannt, so können dann für die eingebrachte Hülsenpartie bzw. deren Erwärmungsprozess (vorher) festgelegte Erwärmungsparameter festgelegt werden, wie u. A. insbesondere die (individuelle) Schrumpf-/Erwärmungsfrequenz.

**Alternative:** Neuronales Netz ist auch auf die Geometrie bzw. der Außendurchmesser der in die Induktionsspule eingebrachten Hülsenpartie trainiert - und kann so auch die Geometrie bzw. der Außendurchmesser der in die Induktionsspule eingebrachten Hülsenpartie ermitteln.

Der Erwärmungsprozess der eingebrachten Hülsenpartie wird dann mit seiner individuellen Schrumpf-/Erwärmungsfrequenz gestartet, wobei gleichzeitig mit dem Start der Leistungsversorgung der Induktionsspule auch die Messung des Spulenstroms, der Spulenspannung, des Zwischenkreisstroms und der Zwischenkreisspannung beginnt (vgl. dazu Schaltung nach FIG 2).

Die beschriebene "neuronale" Überwachung und Steuerung ermöglicht so dann ein weitestgehend automatisches bzw. automatisiertes Schrumpfen. Manuelle Eingriffe zur Einstellung von Betriebsparametern sind hierbei überflüssig, so dass einerseits die hierfür bisher benötigte Zeit eingespart wird und andererseits durch den automatischen/automatisierten Betrieb auch hohe Standards hinsichtlich Betriebssicherheit und Toleranzen eingehalten werden können, um einen vorschriftsmäßigen Betrieb der Baueinheit sicherstellen zu können. Auch ein effizienter Schutz vor Überhitzen der Hülsenpartie wird erreicht.

### (Weitere) Verwendung des Prüfimpuls bei der Erwärmungskontrolle (Kenngröße Δt und Kenngröße ∫) (FIG 4)

Wie vorbeschrieben, zeigt FIG 4 beispielhaft die Zeit-/Stromkurven für drei (verschiedene) in die Induktionsspule eingebrachten Hülsenpartien bzw. Werkzeughalter für einen definierten Prüfimpuls.

Aus einer solchen Zeit-/Stromkurve eines bestimmten Werkzeughalters/Hülsenpartie lassen sich, wie FIG 4 auch zeigt, zwei weitere Kenngrößen für einen Werkzeughalter/eine Hülsenpartie ermitteln.

### - Kenngröße Δt

Die Kenngröße **Δt** beschreibt die Zeitdauer, die - bei Aufgabe des Prüfimpulses - der Spulenstromstrom braucht, bis er seinen Maximalwert (vgl. FIG 4, "max.") erreicht (vgl. FIG 4, Δt1, Δt2, Δt3).

### - Kenngröße ∫

Die Kenngröße ∫ beschreibt die Fläche unterhalb der Zeit-/Stromkurve beim Prüfimpuls (vgl. FIG 4, Prüfimpuls 1) während des Abfalls des Spulenstroms nach Erreichen seines maximalen Wertes - bis zu einem definierten Punkt bzw. definierten, weiteren vorgebbaren Ereignis, hier das Aufbringen eines nächsten Prüfimpulses (vgl. FIG 4, Prüfimpuls 2) (vgl. FIG 4, *∫*1*,* ∫2*,* ∫3).

Alternativ kann für die Kenngröße ∫ auch die gesamte Fläche unterhalb der Zeit-/Stromkurve beim Prüfimpuls herangezogen werden.

Beide Kenngrößen Δt und ∫ sind, wie FIG 4 verdeutlicht, individuell, spezifisch für einen Werkzeughalter/Hülsenpartie - und somit geeignet, einen spezifischen, bestimmten Werkzeughalter zu beschreiben bzw. zu definieren. Hierüber lassen sich so, bestimmte Kontrollfunktionen beim induktiven Erwärmungsprozess bei der Schrumpfvorrichtung - für einen durch die beiden Kenngrößen Δt und ∫ beschriebenen Werkzeughalter/Hülsenpartie - durchführen.

Grundlage hierzu bildet eine Datenbasis aus Spulenstrom-Messungen von Prüfimpulsen an vorgegebenen ((annähernd) eine gesamte Produktpalette abbildenden) Werkzeughaltern für einstellbare Spulenpositionen bei möglichen (erfolgreichen) Schrumpfvorgängen in der Schrumpfvorrichtung.

Hieraus werden für jeden Werkzeughalter die beiden Kenngrößen Δt und ∫ - jeweils für jeden Werkzeughalter in jeder möglichen (erfolgreichen) Spulenschrumpfposition bestimmt. Jeder dieser definierten Schrumpfprozesse kann mit dem jeweiligen (erfolgreichen) Schrumpf-/Erwärmungsparametersatz verknüpft werden ("Datensatz" aus Werkzeughalter, Kenngröße Δt und Kenngröße ∫, Spulenposition, Schrumpf-/Erwärmungsparameter).

Diese Datenbasis kann dann für bestimmte Kontrollfunktionen beim induktiven Erwärmungsprozess bei der Schrumpfvorrichtung verwendet werden.

### - Kontrolle der Spuleneinstellung mittels der Kenngrößen Δt und ∫

Bei der Kontrolle der Spuleneinstellung für einen Schrumpfvorgang bei einem - bekannten -, zu schrumpfenden Werkzeughalter wird dieser in die Schrumpfvorrichtung eingesetzt - und die Induktionsspule in eine - für diesen bekannten Werkzeughalter vorgegebene (erfolgreiche) Spulenschrumpfposition eingestellt.

Der Prüfimpuls wird aufgebracht - und der Spulenstrom gemessen sowie die beiden Kenngrößen Δt und ∫ bestimmt. In der Datenbasis wird geprüft, ob ein Datensatz existiert, dessen Kenngrößen Δt und ∫ mit denen des Prüfimpulses (weitgehend) übereinstimmen.

Ist dieses der Fall, so erfolgte die Einstellung der Spulenschrumpfposition korrekt; lässt sich in der Datenbasis kein entsprechender Datensatz ermitteln, so wird die Einstellung der Spulenschrumpfposition als falsch zurückgemeldet.

### - Bestimmung der Schrumpfparameter mittels der Kenngrößen Δt und ∫

Hier wird ein (unbekannter) Werkzeughalter in die Schrumpfvorrichtung eingesetzt - und die Induktionsspule in eine (aus Sicht des erfahrenen) Bedieners mögliche (erfolgreiche) Spulenschrumpfposition eingestellt.

Der Prüfimpuls wird aufgebracht - und der Spulenstrom gemessen sowie die beiden Kenngrößen Δt und ∫ bestimmt. In der Datenbasis wird genau derjenige Datensatz bestimmt, dessen dortige beiden Kenngrößen Δt und ∫ mit denen des Prüfimpulses am besten übereinstimmen.

Nach Identifikation dieses "passenden" Datensatzes können diesem die Schrumpfparameter für den (unbekannten) Werkzeughalter entnommen werden - und dieser nach diesen (erfolgreich) geschrumpft werden.

Ungeachtet dessen, können auch die beiden Kenngrößen Δt und ∫ (alleine oder in Kombination) - ergänzend zu den bereits beschriebenen Eingangsgrößen - dem vorgeschriebenen neuronalen Netz als Eingangsgrößen zugeführt werden. Die Trainingsdaten/-sätze können entsprechend angepasst werden.

### Überwachung des Schrumpf-/Erwärmungsvorgangs - Überhitzungsschutz mittels Entscheidungsbäumen 60 (FIG 5)

FIG 5 zeigt (beispielhaft) einen Entscheidungsbaum 60.

Dieser Entscheidungsbaum 60 sieht drei Entscheidungsebenen 61a, b, und c sowie eine Ergebnisebene 62 vor. Strukturbedingt liefert so der Entscheidungsbaum acht Ergebniswerte EGW 1, EGW 2, ... EGW 8 (in der Ergebnisebene 62), welche dazu verwendet werden, um einen angenommenen Anfangs-/Startwert AW einer Temperatur der eingebrachten Hülsenpartie des Werkzeughalters HP-T auf eine (prognostizierte) Temperatur der eingebrachten Hülsenpartie des Werkzeughalters HP-T hinzukorrigieren 63.

Verwendet werden - in diesem Fall - hundert solcher jeweils gleich strukturierter Entscheidungsbäume 60, deren Korrekturwerte dann (entsprechend den hundert Entscheidungsbäumen 60) jeweils zu 1% in die Korrektur eingehen.

Der so mit allen Entscheidungsbäumen bzw. all deren Korrekturwerten korrigierte Anfangs-/Startwert der Temperatur der eingebrachten Hülsenpartie des Werkzeughalters HP-T ist so dann die (prognostizierte) Temperatur der eingebrachten Hülsenpartie des Werkzeughalters HP-T (zu einem bestimmten Erhitzungszeitpunkt).

Zugeführt werden den Entscheidungsbäumen 60 jeweils - für einen Erhitzungszeitpunkt t - zehn von den (u. a. gemessenen) Kenngrößen KG sowie fünf von den (daraus abgeleiteten) weiteren Kenngrößen wKG des Induktionsvorgangs. Beispielsweise, die erwähnten (Kenn-)Größen Spulenstrom M-SpA, Spulenspannung M-SpV sowie Zwischenkreisstrom M-EA und Zwischenkreisspannung M-EV - sowie die weiteren Kenngrößen, Delta Spulenstrom M-SpA, Delta Zwischenkreisstrom M-EA sowie Delta Energie und Delta Kalman. Jeder Entscheidungsbaum 60 entscheidet für seine Knoten - und liefert den entsprechenden Ergebniswert EGW 1, EGW 2, ... EGW 8.

Mit einer Abtastrate von 30 ms im Induktionsvorgang erfolgt die Bereitstellung der Kenngrößen für die Entscheidungsbäume 60 während des Induktionsvorgangs, die so für diese Zeitpunkte dann, wie oben beschrieben, die Temperaturen der eingebrachten Hülsenpartie des Werkzeughalters HP-T ermitteln.

Überschreitet eine ermittelte Temperatur der eingebrachten Hülsenpartie des Werkzeughalters HP-T eine vorgegebene Grenztemperatur, so wird der Induktionsvorgang beendet.

### Training der Entscheidungsbäume 60

Das Training der Entscheidungsbäume erfolgt mittels CART/Scikit-learn, wobei eine Strukturvorgabe auf die drei Entscheidungsebenen und die eine Ergebnisebene erfolgt.

Die Trainingsdaten sind als sechzehn zeilige Vektoren mit den erwähnten zehn Kenngrößen KG und fünf weiteren Kenngrößen wKG sowie dem Korrekturwert ausgebildet. Das Training erzeugt dabei eine Vielzahl von Entscheidungsbäumen (mit jeweils antrainierten Knotenparametern (d.h., bestimmte der Kennwerte) und deren Entscheidungswerte) und Korrekturwerten, aus deren Vielzahl von Entscheidungsbäumen hundert "beste" Entscheidungsbäume ausgewählt werden, - sowie auch den erwähnten Anfangs-/Startwert der Temperatur der eingebrachten Hülsenpartie des Werkzeughalters HP-T.

Beispielsweise kann ein Auswahlkriterium für die ausgewählten Entscheidungsbäume 60 die Unterschiedlichkeit jeweils der Knotenparameter sein. Je unterschiedlicher die trainierten Entscheidungsbäume 60 sind, desto besser und zuverlässiger mag die Prognose des Temperaturwertes über das Spektrum möglicher Hülsenpartien sein.

Gegebenenfalls kann mit normalisierten Kenngrößen gearbeitet werden, was sich - auch - als Ergebnis des Trainingsprozesses herausstellen kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

## Patentansprüche

1. **Verfahren zur Überwachung eines induktiven Erwärmungsvorgangs** für eine Induktionsspulen-Baueinheit mit einer in einer Induktionsspule der Induktionsspulen-Baueinheit eingebrachten Hülsenpartie eines Werkzeughalters,
**dadurch gekennzeichnet, dass**
- zumindest eine, insbesondere mehrere unterschiedliche, Kenngrößen des Induktionsvorgangs, insbesondere ein Spulenstrom und/oder eine Spulenspannung und/oder ein Eingangsstrom und/oder eine Eingangsspannung und/oder ein Zwischenkreisstrom und/oder eine Zwischenkreisspannung, zur Verfügung gestellt wird bzw. werden,
- die zumindest eine bzw. die mehreren unterschiedlichen Kenngrößen einem selbstlernenden System, insbesondere einem neuronalen Netz, zugeführt werden, welches selbstlernende System unter Verwendung der zumindest einen bzw. der mehreren unterschiedlichen Kenngrößen eine Überwachungskenngröße, wie eine Temperaturkenngröße der in die Induktionsspule eingebrachten Hülsenpartie und/oder eine Hülsenkenngröße der in die Induktionsspule eingebrachten Hülsenpartie und/oder eine Zeitkenngröße für den Erwärmungsvorgang der in die Induktionsspule eingebrachten Hülsenpartie, ermittelt, und
- unter Verwendung der Überwachungskenngröße, wie der Temperaturkenngröße und/oder der Hülsenkenngröße und/oder der Zeitkenngröße, der Erwärmungsvorgang überwacht wird.

2. **Verfahren zur Überwachung eines induktiven Erwärmungsvorgangs** nach mindestens einem der voranstehenden Ansprüche, **dadurch gekennzeichnet, dass**
- zumindest eine weitere Kenngröße, wie eine momentane Änderung des Spulenstroms und/oder des Zwischenkreisstroms und/oder eine momentane Änderungsgeschwindigkeit des Spulenstroms und/oder des Zwischenkreisstroms und/oder eine absolute Spulenspannung und/oder ein absoluter Spulenstrom und/oder eine Energie aus einem seit Beginn des Erwärmens geflossenen Spulenstroms und/oder Zwischenkreisstroms und/oder ein Integral des seit Beginn des Erwärmens geflossenen momentanen Spulenstroms (Wirkstrom) und/oder Zwischenkreisstroms und/oder eine Heizzeit seit Beginn des Erwärmens und/oder eine momentane Induktivität der Induktionsspule oder eines Gesamtsystems aus der Induktionsspule und der Hülsenpartie und/oder ein momentaner Phasenwinkel zwischen einem momentanen Spulenstrom (Wirkstrom) und einer ihn treibenden Spulenspannung und/oder eine Zeit(-dauer), innerhalb der der Spulenstrom oder Zwischenkreisstrom eine vorgebbare Veränderung, beispielsweise einen Anstieg, erfährt, zur Verfügung gestellt und/oder dem selbstlernenden System zugeführt werden, welches unter Verwendung der zumindest einen weiteren Kenngrößen die Überwachungskenngröße ermittelt.

3. **Verfahren zur Überwachung eines induktiven Erwärmungsvorgangs** nach mindestens einem der voranstehenden Ansprüche, **dadurch gekennzeichnet, dass**
die zur Verfügung Stellung der zumindest einen bzw. mehreren unterschiedlichen Kenngrößen und/oder der zumindest einen weiteren Kenngröße durch Messung vor und/oder während, insbesondere während, des Erwärmungsvorgangs oder durch Bereitstellen von, insbesondere gespeicherten oder errechneten, Werten für die zumindest eine bzw. mehreren unterschiedlichen Kenngrößen und/oder die zumindest eine weitere Kenngröße erfolgt.

4. **Verfahren zur Überwachung eines induktiven Erwärmungsvorgangs** nach einem der voranstehenden Ansprüche **dadurch gekennzeichnet, dass**
eine dem selbstlernenden System zur Verfügung gestellte Kenngröße vor seiner Zuführung zu dem selbstlernenden System einen digitalen Glättungsfilter durchläuft, beispielsweise einen Kalman-Filter, oder einer Normalisierung.

5. **Verfahren zur Überwachung eines induktiven Erwärmungsvorgangs** nach mindestens einem der voranstehenden Ansprüche, **dadurch gekennzeichnet, dass**
das Erwärmen der Hülsenpartie beendet (oder zumindest verändert) wird, wenn die Überwachungskenngröße und/oder eine der dem selbstlernenden System zugeführten Kenngrößen einen festlegbaren Grenzwert erreicht bzw. über- oder unterschreitet.

6. **Verfahren zur Überwachung eines induktiven Erwärmungsvorgangs** nach mindestens einem der voranstehenden Ansprüche, **dadurch gekennzeichnet, dass**
die Temperaturkenngröße eine Hülsenpartietemperatur des Werkzeughalters und/oder die Hülsenkenngröße eine Geometrieangabe für die Hülsenpartie- bzw. den Werkzeughalter, insbesondere eine Werkzeughaltergröße, oder eine die Hülsenpartie- bzw. den Werkzeughalter klassifizierende Angabe und/oder die Zeitkenngröße eine Resterwärmungsdauer sind/ist.

7. **Verfahren zur Überwachung eines induktiven Erwärmungsvorgangs** nach mindestens einem der voranstehenden Ansprüche, **dadurch gekennzeichnet, dass**
unter Verwendung der ermittelten Überwachungsgröße ein Erwärmungsparameter und/oder ein Abschaltparameter festgelegt oder nachjustiert wird.

8. **Induktionsspulen-Baueinheit** zur Durchführung eines Verfahrens nach mindestens einem der voranstehenden Verfahrensansprüche mit einer Induktionsspule, in welche eine Hülsenpartie eines Werkzeughalters einbringbar ist,
**gekennzeichnet durch**
- ein selbstlernendes System, welches unter Verwendung der zumindest einen bzw. der mehreren unterschiedlichen Kenngrößen nach Anspruch 1 eine Überwachungskenngröße, wie eine Temperaturkenngröße der in die Induktionsspule eingebrachten Hülsenpartie und/oder eine Hülsenkenngröße der in die Induktionsspule eingebrachten Hülsenpartie und/oder eine Zeitkenngröße für den Erwärmungsvorgang der in die Induktionsspule eingebrachten Hülsenpartie, ermittelt.

9. **Induktionsspulen-Baueinheit** nach mindestens dem voranstehenden Vorrichtungsanspruch,
**dadurch gekennzeichnet, dass**
- das selbstlernende System unter Verwendung zumindest einer weiterer Kenngröße nach Anspruch 2 die Überwachungskenngröße ermittelt.

10. **Induktionsspulen-Baueinheit** nach mindestens einem voranstehenden Vorrichtungsanspruch,
**gekennzeichnet, durch**
mindestens einen Strom- und/oder Spannungsdetektor entweder in einem Zwischenkreis eines zur Versorgung des Spulenkreises mit elektrischer Energie dienenden Frequenzumrichters und/oder in einem Spulenkreis mit der Induktionsspule.

11. **Induktionsspulen-Baueinheit** nach mindestens einem voranstehenden Vorrichtungsanspruch,
**gekennzeichnet durch**
einen Komparator für einen Vergleich von mindestens einer der Kenngrößen, wie die Überwachungskenngröße und/oder eine der dem selbstlernenden System zugeführten Kenngrößen nach Anspruch 1 und/oder nach Anspruch 2, mit einem hierfür vorgegebenen Grenzwert.

12. **Induktionsspulen-Baueinheit** nach mindestens einem voranstehenden Vorrichtungsanspruch,
**gekennzeichnet, durch**
eine Abschaltautomatik, welche derart eingerichtet ist, dass sie den Erwärmungsvorgang durch die Induktionsspule abschaltet (oder zumindest verändert), wenn bei dem Vergleich der Grenzwert erreicht bzw. unter- oder überschritten wird.

13. **Induktionsspulen-Baueinheit** nach mindestens einem voranstehenden Vorrichtungsanspruch,
**gekennzeichnet, durch**
mindestens zwei, insbesondere parallellaufenden, selbstlernenden Systemen, welche unterschiedliche Überwachungskenngrößen ermitteln, insbesondere eine Temperaturkenngröße und eine Hülsenkenngröße.

14. **Selbstlernendes System** zur Überwachung eines induktiven Erwärmungsvorgangs, insbesondere neuronales Netz oder Entscheidungsbaum,
**eingerichtet, um**
- unter Verwendung der zumindest einen bzw. der mehreren unterschiedlichen Kenngrößen nach Anspruch 1 eine Überwachungskenngröße, wie eine Temperaturkenngröße der in die Induktionsspule eingebrachten Hülsenpartie und/oder eine Hülsenkenngröße der in die Induktionsspule eingebrachten Hülsenpartie und/oder eine Zeitkenngröße für den Erwärmungsvorgang der in die Induktionsspule eingebrachten Hülsenpartie, zu ermitteln.

15. **Selbstlernendes System,** insbesondere neuronales Netz oder Entscheidungsbaum, nach mindestens dem voranstehenden Anspruch,
**eingerichtet, um**
- unter Verwendung auch von der zumindest einen weiteren Kenngröße nach Anspruch 2 die Überwachungskenngröße zu ermitteln.

16. **Selbstlernendes System,** insbesondere neuronales Netz, nach mindestens einem der zwei voranstehenden Ansprüche, **gekennzeichnet, durch**
eine Vielzahl von verdeckten Schichten, insbesondere von mehr als 10 verdeckten Schichten, insbesondere von mehr als 15 verdeckten Schichten, insbesondere von mehr als 20 verdeckten Schichten, insbesondere von mehr als 25 verdeckten Schichten, im Besonderen von mehr als 30 verdeckten Schichten, ganz im Besonderen von 32 verdeckten Schichten.

17. **Selbstlernendes System,** insbesondere neuronales Netz, nach mindestens einem der drei voranstehenden Ansprüche, **dadurch gekennzeichnet, dass**
eine ReLU-Funktion oder eine Sigmoid-Funktion als Aktivierungsfunktion bei dem selbstlernenden System, insbesondere dem neuronalen Netz, verwendet wird.

18. **Selbstlernendes System,** insbesondere Entscheidungsbaum, nach mindestens einem der drei voranstehenden Ansprüche 14 bis 16,
**dadurch gekennzeichnet, dass**
eine Vielzahl von den Entscheidungsbäumen, insbesondere jeweils gleichstrukturierter Entscheidungsbäume, verwendet werden, insbesondere wobei eine Auswahl der verwendeten Vielzahl von neuronalen Netzen nach einem Kriterium einer Unterschiedlichkeit der Entscheidungsbäume erfolgt.

19. Verfahren zum Training des selbstlernenden Systems, insbesondere neuronales Netz oder Entscheidungsbaum, nach mindestens einem der voranstehenden Ansprüche gerichtet auf das selbstlernende System
**dadurch gekennzeichnet, dass**
- das selbstlernende System unter Verwendung der zumindest einen bzw. der mehreren unterschiedlichen Kenngrößen nach Anspruch 1, dahingehend trainiert wird, um die Überwachungskenngröße, wie die Temperaturkenngröße der in die Induktionsspule eingebrachten Hülsenpartie und/oder die Hülsenkenngröße der in die Induktionsspule eingebrachten Hülsenpartie und/oder die Zeitkenngröße für den Erwärmungsvorgang der in die Induktionsspule eingebrachten Hülsenpartie, zu ermitteln.

20. Verfahren zum Training des selbstlernenden Systems, insbesondere neuronales Netz oder Entscheidungsbaum, nach mindestens dem voranstehenden Anspruch
**dadurch gekennzeichnet, dass**
- auch die zumindest eine weitere Kenngröße nach Anspruch 2 zu dem Training verwendet wird.

21. Verfahren zum Training des selbstlernenden Systems, insbesondere neuronales Netz oder Entscheidungsbaum, nach mindestens einem der beiden voranstehenden Ansprüche,
**dadurch gekennzeichnet, dass**
- auch die Überwachungskenngröße, wie der Temperaturkenngröße und/oder der Hülsenkenngröße und/oder der Zeitkenngröße, zu dem Training verwendet wird, wobei insbesondere die zu dem Training verwendete Überwachungskenngröße unter Verwendung von definiert durchgeführten Erwärmungsvorgängen bestimmt werden, insbesondere dort gemessen oder aus dort gemessenen Größen ermittelt werden.

22. **Verfahren zum Training des selbstlernenden Systems,** insbesondere neuronales Netz oder Entscheidungsbaum, nach mindestens einem der drei voranstehenden Ansprüche,
**dadurch gekennzeichnet, dass**
das Training unter Verwendung eines Backpropagation-Verfahrens bzw. eines CART- und/oder Scikit-learn- Algorithmus durchgeführt wird.

23. **Verfahren zum Training des selbstlernenden Systems,** insbesondere neuronales Netz oder Entscheidungsbaum, nach mindestens einem der vier voranstehenden Ansprüche,
**dadurch gekennzeichnet, dass**
das selbstlernende System unter Verwendung von Benutzerrückmeldungen und/oder Benutzerinteraktionen nachtrainiert wird.
